# EUROPEAN PATENT SPECIFICATION

(11) **EP 4 087 700 B1**
(45) Date of publication and mention of the grant of the patent: **21.05.2025**
(21) Application number: 21738094.8
(22) Date of filing: 08.01.2021
(51) Int. Cl.: B23K 9/12, B23K 9/28, B23K 9/235, B23K 9/24, B23K 26/352

(54) **WIRE GUIDE CONDUIT ADAPTED FOR ALLOWING MOVEMENT OF A CORE, AND METHOD FOR FORMING A WIRE GUIDE CONDUIT FORMING AN INTERNAL PASSAGEWAY FOR THE PASSAGE OF A CORE**
DRAHTFÜHRUNGSLEITUNG, DIE DIE BEWEGUNG EINES KÖRPERS ERMÖGLICHT, UND VERFAHREN ZUM BILDEN EINES DRAHTFÜHRUNGSKANALS, DAS EINEN INNEREN DURCHGANG FÜR DEN DURCHGANG EINES KÖRPERS BILDET
CONDUIT DE GUIDAGE DE FIL ADAPTÉ POUR PERMETTRE LE DÉPLACEMENT D'UN CORPS, ET PROCÉDÉ DE FORMATION D'UN CONDUIT DE GUIDAGE DE FIL FORMANT UN PASSAGE INTERNE POUR LE PASSAGE D'UN CORPS

(30) Priority: 10.01.2020 US 202062959330 P
(43) Date of publication of application: 16.11.2022
(73) Proprietor: ELCo Enterprises, Inc., Jackson, MI 49201 (US)
(72) Inventor: COOPER, Edward L., Clarklake, MI 49234 (US); KHAKHALEV, Alexander, Ann Arbor, MI 48104 (US)
(74) Representative: Dr. Solf & Zapf Patent- und Rechtsanwalts PartG mbB
(86) International application number: PCT/US2021/012716
(87) International publication number: WO 2021/142273

(56) References cited:
- US-A- 2 536 294
- US-A- 3 053 966
- US-A- 3 248 515
- US-A- 4 560 858
- US-A- 5 437 282
- US-A- 5 931 830
- US-A1- 2005 054 950
- US-A1- 2010 276 407
- US-A1- 2017 367 712
- US-A1- 2017 367 712
- US-B2- 9 056 367

## Description

The present invention relates to a wire guide conduit adapted for allowing movement of a core, and a method for forming a wire guide conduit forming an internal passageway for the passage of a core, see claims 1 and 10. In particular, the present invention relates to a spring type wire guide conduit constructed of coiled wire having an oval or elliptical cross-section and further featuring locally hardened surface areas on the inside of the conduit to improve wire flow through the conduit. US 2017/0367712 A1 discloses a medical device, namely a delivery system for precise navigation within and through body passages. The disclosure relates to delivery systems for accurate positioning and release of elements within tortuous, narrow and/or fragile passages. The delivery system comprises a wound wire comprising a plurality of adjacent windings, wherein the wound wire includes a first region, a second region, and an intermediate region between the first and second regions. At least a portion of the windings of the intermediate region includes a differential welding pattern between one or more adjacent windings along a length thereof. US 2017/0367712 A1 discloses a medical device, namely a hollow catheter shaft for an ultrasound imaging device having inner and outer members in interfering contact along their length, at least one of which comprises a wire, at least a portion of which is superelastic, to achieve substantial mechanical fidelity and resistance to damage. The shaft comprises at least one metal coil having characteristic elastic deformation under stress.

US 2010/0276407 A1 (describing the preamble of claims 1 and 10) discloses a conduit constructed from a coiled wire having an oval or elliptical cross-sectional shape and a method for forming a conduit. A coating is provided on a first side of the wire before the wire is coiled to form the conduit. The first side of the wire forms an inner passageway of the conduit so that the coating is provided on the inner passageway of the conduit. The coating tends to have a limited operational lifespan as the lubricant materials dissipate over operational use of the wire guide conduit.

### BACKGROUND

Metal Inert Gas (MIG) welding also referred to as "wire-feed" or Gas Metal Arc Welding (GMAW) utilizes heat from an electrical arc to melt a consumable electrode to form a weld on a workpiece. In this description, these systems will be collectively described as MIG welding systems. A MIG welding system typically includes a power supply, a gas supply and an electrode supply connected to a welding device or welding gun. A ground cable is used to connect the workpiece to the power supply. The welding device generally includes a handle, a gooseneck and an end assembly. The welding system can be automatic or semi-automatic and may be manually or robotically controlled. The electrode and gas are coupled through a conduit in the handle and the gooseneck to the end assembly of the welding device. The electrode extends through the contact tip of the end assembly and the gas moves around the contact tip in the nozzle of the end assembly to shield the weld site. When the welding device is activated, the electrode is fed through the contact tip toward the workpiece and the gas is directed through the nozzle to flood the weld site. When the electrode is placed adjacent to or in contact with the workpiece, the electrode completes an electrical circuit between the power supply and the workpiece, allowing current to flow through the electrode to the workpiece. The current produces an arc between the electrode and the workpiece. The heat of the arc melts the electrode and the workpiece in the region surrounding the arc, creating a weld puddle. The gas flowing out the nozzle shields the weld puddle from atmospheric gases and outside contaminants. The type of shielding gas used in MIG welding varies depending on many factors. Noble or inert gases such as Argon are often used. However, Carbon Dioxide (CO₂) and a mixture of gases such as CO₂ and Argon are also used. Once the electrode is moved away from the workpiece, the electric circuit is broken and the weld puddle cools and solidifies, forming a weld.

In typical MIG welding systems, a flexible wire guide conduit is used to transport the flexible electrode wire from a storage bin, typically from a wire spool, through a wire feeder drive device and through the flexible wire guide conduit to the torch. Flexible conduits are generally formed by coiling a wire to produce a hollow passageway through which the electrode wire moves. These types of conduits are often referred to as spring type or spring liner conduits.

In the past, weld wire conduits used in weld wire dispensing systems have been constructed using wire having a rectangular cross-section. However, in instances where the weld torch cable or weld wire conduit is bent or flexed, the edges of the wire forming the conduit are exposed. The exposed edges of the wire forming the conduit damages the surface of the weld wire as the weld wire is pushed or pulled through the conduit. The sharp edges of the conduit wire can "shave" or cut the weld wire as the weld wire is moved through the passageway of the conduit. The sharp edges also increase friction between the weld wire and the conduit as the weld wire is moved through the weld wire conduit.

The higher friction results in more force being required to move the weld wire through the conduit, which decreases the overall efficiency of the weld wire dispensing system, and can lead to binding and failure of the weld wire delivery system. Damage to the surface of the weld wire caused by the exposed edges of the wire forming the conduit also results in the shavings and residue collecting in the inner passageway of the conduit. In some instances, the build-up of shavings and residue eventually prevents the weld wire from being pulled or pushed through the conduit. In addition, as the shavings and residue build-up in the conduit, they significantly increase friction between the weld wire and the conduit and thus increase the force needed to push or pull the weld wire through the conduit. The increase in friction also causes drive roll wire slippage in the weld wire dispensing system, as well as burn-back in the system. The shavings and residue can also lead to the weld wire being stuck inside the torch contact tip.

Wire guide conduit conduits are also constructed of wire having a circular cross-section. However, it is difficult to provide a protective coating on only the inner surface of the conduit constructed of round wire. Round wire tends to rotate in dies; therefore, it is extremely difficult to set a desired surface of the round wire in a continuous position as necessary to provide coating on only the inner surface of the conduit which contacts the electrode wire.

The present applicant has devised improvements in the area of flexible wire conduits and have introduced the use of elliptical or non-round wire to form weld wire conduits. Wire guide conduit conduits based on such wire shapes have resulted in significant improvements in the performance of wire guide conduit conduits for welding. Such configurations are described and claimed in Applicant's previously issued US Patent Nos. 9,056,367 and 9,687,932.

In an effort to improve weld wire guide conduit performance, it is known to provide surface coatings such as lubricants to the wire forming the wire guide conduit. An example is a coating of tungsten sulfide. Although such treatments are beneficial, they tend to have a limited operational lifespan as the lubricant materials dissipate over operational use of the wire guide conduit.

Despite the numerous improvements in the art, there remains a continued need to reduce friction of electrode wire fed to the wire guide conduit and increase their service life. In order to form the tightly wound wire guide conduit conduits, relatively soft metals are used such as 1040 carbon steel. A disadvantage of the formability requirement is the relative softness of such metal alloys. Softness leads to wear over time as the electrode wire is fed through the wire guide conduit, especially where relatively tight bends are present. Wear on the inside surfaces of the wire forming the wire guide conduit leads to shaving of electrode wire as mentioned previously, and even complete cutting through of the wire guide conduit. Further, such wear tends to increase friction forces acting on the electrode wire as it moves to the wire guide conduit and causes an enlargement of the internal passageway of the wire guide conduit which can lead to buckling of the electrode wire; again resulting in decreased efficiency of electrode wire transfer.

The above referenced design challenges related to the transfer of MIG welding electrode wire are also encountered in the field of control wires used for many industrial and commercial applications. For example, control cables are widely used for bicycles for brake and derailleur gear selection control, motorcycles and motor vehicles as clutch and transmission cables, and in other automotive applications for controlling movable panels such as HVAC control doors, etc. Coiled spring type control cables are further used in additional widespread applications.

In view of the foregoing there remains a need for a wire guide conduit having longer life capabilities and improved performance especially as related to friction and service life associated with the transfer of a wire electrode or control cable.

### BRIEF SUMMARY OF THE INVENTION

In accordance with a first aspect of the present invention a wire guide conduit adapted for allowing movement of a core is defined in claim 1, and is constructed from a coiled wire having an oval or elliptical cross-section. Before the wire is formed into the coil, a surface heat treatment process is performed to create locally hardened regions along the wire of the wire guide conduit. Such locally hardened regions can be provided by, for example, laser treatment or other directed energy processes which cause local heating of the surface of the wire to create such hardened regions. These hardened regions are intentionally created to be at discrete isolated locations as to not interfere with the formability of the wire which is adversely affected by increasing hardness.

In the manufacturing process for forming the wire guide conduit the oval wire is treated by a laser (or other directed energy process) to create dots or stripes of locally hardened regions and the wire is thereafter rolled into a wire guide conduit with the locally hardened regions facing the inside surface of the conduit. As the electrode wire moves through such a wire guide conduit, the locally hardened areas act essentially as wear bars or hard points of contact for supporting the electrode wire as it moves through the conduit. Wear of the conduit wire is reduced in these locally hardened regions. This leads to improved longevity and reduced friction during use. Surface coatings and lubricants such as mentioned previously may also be used in conjunction with the present invention. The wire guide conduit in accordance with this invention may also be used as a control cable conduit to allow an actuation cable to be connected between two points.

According to this first aspect of the present invention, the wire guide conduit adapted for allowing movement of a core is provided. The conduit includes a wire coiled in a helical manner to define the conduit and form an internal passageway of the conduit, the passageway defining a longitudinal axis, wherein the wire has a cross-section with a major axis and a minor axis, wherein a thickness of the wire along the major axis is greater than a thickness of the wire along the minor axis, wherein the wire is coiled in the helical manner to present the major axis generally parallel with the longitudinal axis of the passageway, the passageway adapted for receiving the core, wherein the wire has a straight configuration prior to being coiled and includes periodically spaced locally hardened regions having a surface hardness greater than areas of the wire outside of the locally hardened regions, wherein the locally hardened regions are disposed on an inside surface of the conduit facing the internal passageway when the wire is coiled in the helical manner.

In one aspect, the wire consists of a single wire coiled in the helical manner.

In one aspect, the wire has a generally elliptical cross-section.

In one aspect, the internal passageway of the wire guide conduit defines an inner diameter, and wherein the inner diameter is constant along substantially the entire length of the conduit.

In one aspect, the internal passageway of the wire guide conduit defines an inner diameter, and wherein the inner diameter is adapted to closely receive the core in the form of a wire having a circular cross-sectional shape.

In one aspect, the wire has opposed first and second sides on opposite sides of the major axis and extending along the major axis and wherein the locally hardened surfaces are provided on only the first side of the wire so that when the wire is coiled to form the wire guide conduit, the first side of the wire forms the inner passageway of the conduit so that the hardened surfaces are provided only on the inner passageway of the conduit.

In one aspect, the wire guide conduit is configured to be used in a weld wire dispensing system with the core in the form of a welding electrode wire.

In one aspect, the locally hardened regions form a pattern along the wire when the wire is in the straight configuration.

In one aspect, locally hardened regions are equally spaced when the wire is in the straight configuration.

In one aspect, the pattern includes one of a series of dots, a series of stripes, a series of alternatingly inclined stripes, a series of inter-locking circles along the length of the wire, or a series of interlocking circles forming stripes across the surface of the wire.

In one aspect, the locally hardened region is disposed within a profile of the wire when the wire is in a straight configuration such that the locally hardened region does not substantially project relative to adjacent non-hardened regions.

In one aspect, an outside surface of the wire guide conduit does not include any locally hardened regions.

In one aspect, the locally hardened regions are disposed at various circumferential and longitudinal locations on the inside surface of the conduit.

In one aspect, the locally hardened regions do not extend fully across the wire along the major axis.

According to a second aspect of the present invention, a method for forming a wire guide conduit forming an internal passageway for the passage of a core is defined in claim 10. The method includes providing a wire in a straight configuration, the wire having a cross-section forming a major axis and a minor axis, wherein a thickness of the wire along the major axis is greater than a thickness of the wire along the minor axis; wherein the wire has opposed first and second sides on opposite sides of the major axis and extending along the major axis and applying an energy beam to the first side of the wire causing localized heating of a surface of the first side and creating discrete and separated areas of locally hardened regions, and coiling the wire having the locally hardened regions such that the major axis of the wire is aligned with a longitudinal axis defined by the conduit in a manner to present the locally hardened regions toward the internal passageway to form the wire guide conduit.

In one aspect, the core is an electrode wire and the wire guide conduit is used for conducting the electrode wire toward a MIG welding torch.

In one aspect, the energy beam is a laser producing a beam directed onto the first surface of wire.

In one aspect, the beam is tightly focused and moves longitudinally relative to the wire during application of the beam, wherein the beam is a continuous wave or pulsed.

In one aspect, as the beam moves longitudinally relative to the wire, the beam is maintained at a constant lateral orientation relative to the cross-section axis of the wire during application of the beam or the beam moves laterally relative to the wire during application of the beam.

In one aspect, the locally hardened regions are disposed at various circumferential and longitudinal locations on the inside surface of the conduit and no locally hardened regions are disposed on the outside surface of the conduit.

Additional substance and advantages of the present disclosure will become increasingly apparent by reference to the following drawings and the description.

### BRIEF DESCRIPTION OF THE DRAWINGS

Figure 1 is a side cutaway view of a spring type wire guide conduit positioned in a welding torch.
Figure 2 is a side elevational view of a wire guide conduit showing a protruding electrode wire.
Figure 3 is a cross-sectional view of a wire guide conduit according to the present disclosure.
Figure 4 is an end view of the conduit showing the inner passageway of the wire guide conduit.
Figure 5 is a cross-sectional view of the wire used for forming the wire guide conduit.
Figure 6 is an elevational view of wire for forming the wire guide conduit showing locally hardened regions along a surface of the wire.
Figure 7 is a diagrammatic illustration of a laser surface treatment system.
Figures 8-11 show alternate embodiments of patterns of locally hardened regions of wire for forming a wire guide conduit.
Figure 12 is a side elevational view of a wire guide conduit according to the present disclosure used as a control cable.

One inch corresponds to 25.4 mm.

### DETAILED DESCRIPTION OF THE INVENTION

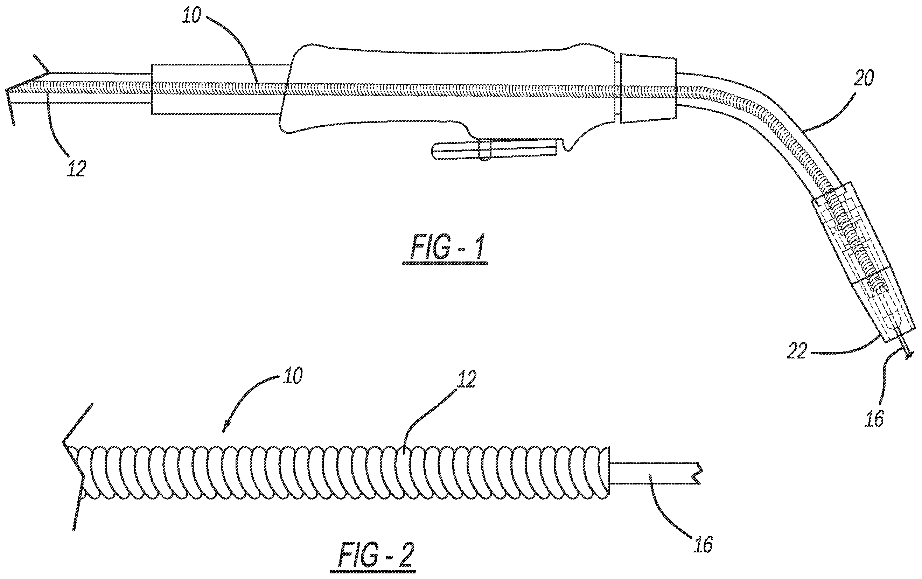

Referring to Figure 1, a representative welding torch 20 is illustrated for use in a MIG welding process. Welding torch 20 includes flexible wire guide conduit 10 formed of a coiled wire 12. In the MIG welding process, electrode wire 16 is fed through wire guide conduit 10 to protrude from torch tip 22. Electrode wire 16 can also be generally characterized as a core.

Wire 12 for forming wire guide conduit 10 has, for example, an essentially oval or elliptical cross-sectional shape (which may also be referred to as non-round). In this description, such cross-sectional shapes for wire 12 will be referred to collectively as having an oval or non-round cross-sectional shape. While the description of non-round may be used, it will be appreciated that the wire 12 may still have a rounded shape with rounded edges (for example excluding sharp edges such as those arising from a rectangular or square cross-section), and that non-round can refer to non-symmetrical shapes as well as symmetrical shapes. Accordingly, reference to non-round may also be used to signify a cross-section that is generally non-circular.

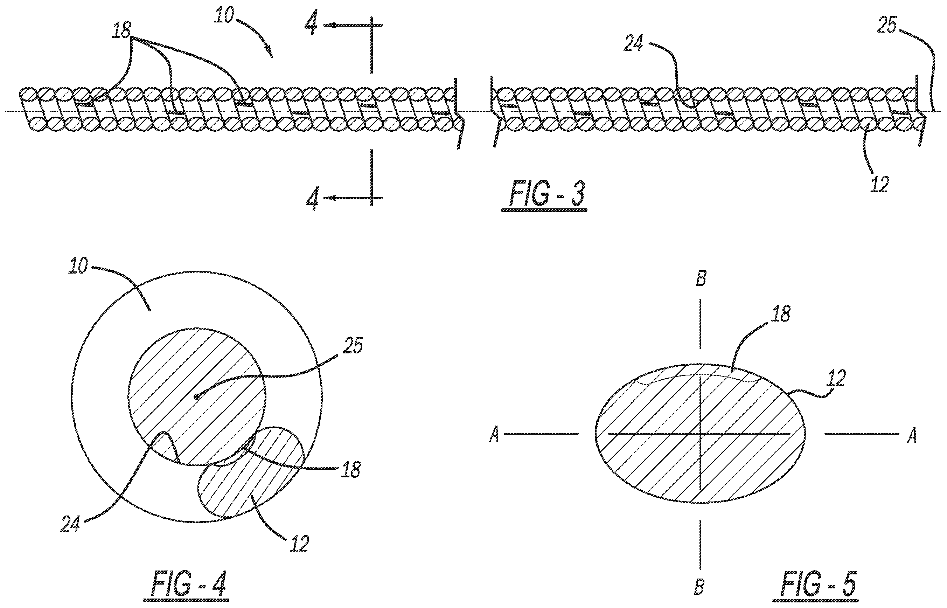

For example, as shown by Figure 5, wire 12 of a representative shape in cross-section forms a major axis A-A and a minor axis B-B. It is understood that wire 12 does not have a circular cross-sectional shape and that the width of wire 12 along major axis A-A is greater than the width of the wire along minor axis B-B. In general, the cross-sectional shape of the wire 12 is such that the wire 12 does not have any sharp corners or flat edges. Wire 12 used to form the conduit 10 can be constructed of any material well known in the art which is used to construct conduits. For example, the wire 12 may be constructed of 1040 carbon steel and formed by drawing a source material through a forming die or roller forming tools. The non-round cross-section of the wire 12 permits the wire 12 to be wound or coiled in a controlled manner to define the conduit 10.

When wire 12 is coiled to form wire guide conduit 10, the wire is oriented such that major axis A-A is aligned along the longitudinal axis 25 of central passageway 24 of the wire guide conduit, as shown in Figure 3. Figure 4 is an end view of wire guide conduit 10 showing in section a view of oval wire 12. As shown in Figure 4, the longitudinal axis 25 appears as a dot, and a cross-section of the wire 12 is shown. The orientation of the cross-section of Figure 5 is similar to that of Figure 3, such that axis B-B is generally aligned transverse to the passageway of the conduit 10 when the wire 12 is coiled.

As shown in Figure 5, the non-circular or non-round wire 12 with the major and minor axis also has a width along axis A-A that is greater than a height along axis B-B. Thus, upper and lower surfaces of the wire 12 in Figure 5 are generally longer than the side surfaces.

One advantage of using non-round wire 12 is that it can be readily oriented during the coiling operation to present a desired surface of the wire facing toward central passageway 24, a feature which is exploited in accordance with the present invention. For example, the upper surface of the wire 12 from Figure 5 can be controlled to be the inner surface when the wire 12 is coiled into the conduit 10. Thus, the lower surface of the wire 12 in Figure 5 can be controlled to be the outer surface of the conduit 10 when the wire 12 is coiled. A round wire, without a major and minor axis, cannot be controlled in the same way, and therefore it can be difficult to ensure that treatment applied prior to coiling the wire 12 ends up in the desired location (inside or outside the coil, depending on the treatment).

There is a broad range of specifications for wire 12 and wire guide conduit 10. In a representative specification, wire 12 has a major axis A-A dimension ranging from approximately 0.050-0.110 inch, and a height along minor axis B-B ranging from approximately 0.033-.072 inch. Wire 12 can be formed into wire guide conduit 10 having a number of turns equaling approximately 9-20 windings per inch, depending on the wire cross-sectional dimensions.

Once coiled and formed into wire guide conduit 10, a representative configuration has an outer diameter of approximately 0.18 inches and an inner diameter for passageway 24 of approximately 0.08 inches, depending on the desired application and configuration of electrode wire 16. Of course, the thickness along axis B-B of the wire 12 will affect the difference between the inner diameter of the conduit 10 and the outer diameter of the conduit 10 when the wire 12 is coiled such that axis B-B is transverse to the longitudinal direction of the conduit 10. Various types of electrode wire 16 can be used with and fed through the wire guide conduit 10 of the present invention including various steel, aluminum and other alloys having a wide range of cross-sectional diameters. Electrode wire 16 can also be of a cored or solid type. The electrode wire 16 has an outer diameter that is less than the inner diameter of the conduit 10. The size of the conduit 10 may be selected based on the electrode wire 16 to be used, or vice versa.

In accordance with the present disclosure, wire 12, after being formed to the desired cross-sectional shape and before being coiled to form wire guide conduit 10, is subjected to a local surface heating and hardening operation. The surface hardening operation creates localized regions of increased hardness, designated in the figures as regions 18. The regions 18 may be permanently defined on the wire 12 in a variety of shapes and/or patterns in a controlled manner, such that the regions 18 may be located specifically within the passageway of the conduit 10 after winding, based on the controlled coiling afforded by the non-round cross-section of the wire 12.

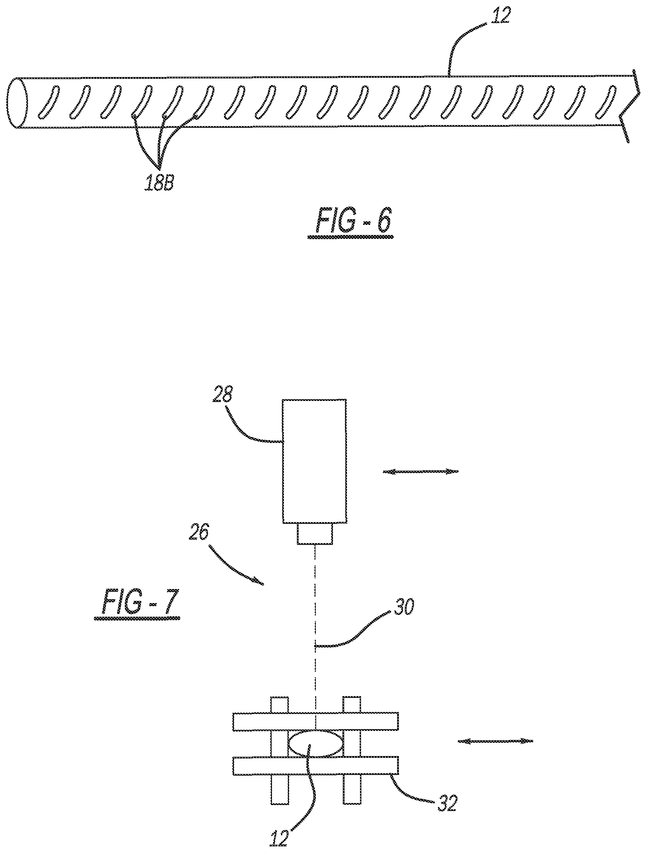

Referring to Figure 6, in one embodiment wire 12 is shown, not yet coiled, as having numerous stripes of hardened areas designated by reference number 18B. Other patterns of forming regions 18 can be provided which are described in more detail in the following discussion. As shown in Figure 6, the stripe-shapes are arranged generally parallel to each other and are spaced apart approximately the same distance.

In a representative process, hardened areas 18 may be formed by subjecting wire 12 to laser radiation. A representative laser treatment system 26 is diagrammatically illustrated in Figure 7. As shown, laser source 28 directs of beam 30 of radiation energy toward wire 12 shown in this figure as being supported by fixture 32. Laser energy from source 28 causes local heating of the surface of wire 12. While numerous lasers may be suitable for this application, a fiber laser outputting radiation at 1,060 nanometers is suitable in some applications. Alternatively, a CO₂ gas laser could be used having an output in the 10,600 nm range. Beam 30 forms a focal spot diameter of, for example 0.05 nm. Such local heating and the subsequent quenching of the heated area causes surface hardening in a well-known manner. For example, in representative configurations, wire 12 formed of high carbon steel tempered to a hardness of 45-47 Rockwell C can be locally hardened in regions 18 to a level of about 58 Rockwell C. The surface hardening is desirably to a limited depth as shown in the cross-sectional view of Figure 5. In one representative configuration, the hardness depth is about 0.25 nm. By forming hardened regions 18 at local areas with a limited depth, their presence does not adversely impact the formability of wire 12; allowing the wire to be coiled to form wire guide conduit 10.

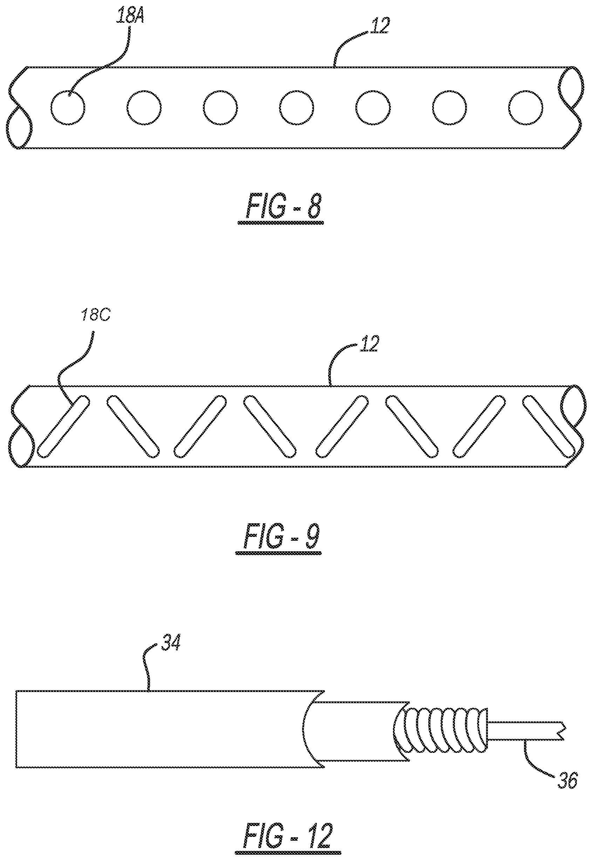

Various types of lasers and processes can be used to produce regions 18. For example, wire 12 can be drawn through fixture 32 in a continuous manner with a pulsed laser directed to a surface of the wire producing a series of "dot" shaped regions 18A such as illustrated by Figure 8. In this approach, the feed rate of the wire 12 through the fixture may be held constant, with the pulse rate also held constant to create evenly spaced dots. In another aspect, the rate of the feed or the pulse rate may be varied to create variable spacing between regions 18.

Alternatively, laser beam 30 could be swept across the diameter of wire 12 and pulsed as the wire moves continuously (at a fixed rate) through fixture 32. Such sweeping can be done by moving the axis of laser beam 30 relative to the wire cross-section or by physically moving wire 12 in a transverse direction with the laser beam axis being fixed. Put another way, the laser beam 30 moves laterally relative to the wire 12 as the wire is fed longitudinally. Such a process yields chevron shaped hardness patterns shown as regions 18B in Figure 6. In another process, laser beam 30 is pulsed and also stroked transversely relative to the diameter of wire 12, producing an alternating inclined orientation of regions 18C as illustrated in Figure 9.

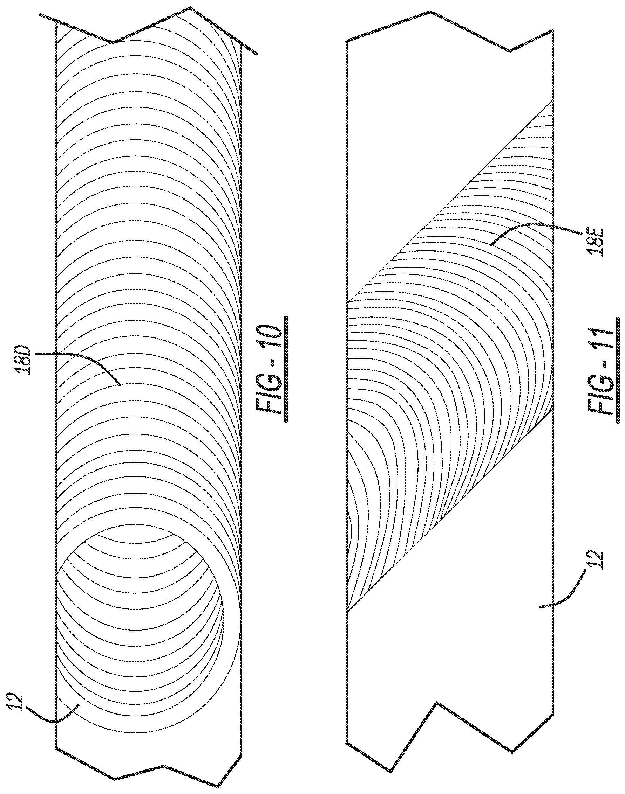

Figure 10 illustrates another alternative pattern for the heating effect produced by laser source 28. In this case laser beam 30 is tightly focused and cause to move in a circular pattern, for example having a circular diameter of about 3.0 nm. As wire 12 moves a chained circular configuration of a regions 18D is produced. Since the hardness pattern results in curved regions 18D is separated by unheated portions, the desired combination of locally hardened and softer annealed adjacent regions is provided. The chained circular patterns shown in Figure 10 appears similar to a coil, but these circles 18D are on the surface of the wire 12, and the wire 12 is illustrated here prior to coiling.

Figure 11 illustrates regions 18E produced by the same circular tracing of beam 30, but sweeping the beam across the diameter of wire 12 as it is moved continuously. Similar to Figure 10, the illustration of Figure 11 shows a pattern created on a surface of wire 12 that is shown flat and prior to coiling into the conduit.

These are only several example embodiments of a manner of creating locally hardened regions 18 on the surface of wire 12. As stated previously, the goal is to provide a sufficient number of hardened areas to create hardened "wear bar" regions without interfering with the ability to coil wire 12 to form wire guide 10.

Various spacing between hardened regions 18 can be provided. Referring in particular to Figure 3, a number of the hardened regions 18 are at designated locations. It is noted that these hardened regions 18, in the configuration shown, occur at various angular positions relative to central passageway 24. It is desired that these hardened regions 18 occur at various positions both longitudinally along central passageway 24 and at different radial positions to act essentially as "wear bars" such that the electrode wire 16 will make contact with these areas as it traverses through central passageway 24 regardless of how wire guide 10 is bent.

In one aspect, with the inner surface of the conduit 10 being divided into four quadrants, hardened regions 18 are disposed on each of the four quadrants along substantially the entire length of the conduit 10. Thus, the electrode wire 16 that passes through the conduit 10 may be in contact with multiple regions 18 on various radial portions of the electrode wire 16, thereby reducing overall friction as the electrode wire 16 passes through the conduit 10 relative to a conduit without hardened portions.

In one aspect, the hardened regions 18 do not project substantially from the surface of the wire 12. Rather, as described above, the hardened regions 18 are located in a depth of the thickness of the wire 12.

In one aspect, the hardened regions 18 are limited to the interior surface of the conduit 10. In this aspect, there are no hardened regions located on the outer surface of the conduit 10.

In one aspect, the hardened regions 18 do not extend fully across the upper surface of the wire 12 when the wire is flat, and therefore do not extend into contact with adjacent coils of the conduit 10 when the wire 12 is coiled into the conduit 10. As shown in Figure 3, the rounded shaped of the elliptical or oval cross-section creates recesses between adjacent coils of the conduit 10. Thus, the electrode wire 16 typically will not make contact with the base of thee recesses. Thus, hardening areas that are ultimately disposed within the recesses may not be necessary.

As the electrode wire 16 passes through the conduit 10, the electrode wire 16 makes contact both with the hardened regions 18 as well non-hardened portions of the wire 12 that forms the conduit 10.

A design trade-off occurs as the number and size of regions 18 increases so does the likelihood of cracking or restrictions in flexibility of wire 12 as it is being coiled to form wire guide conduit 10. The optimum pattern in size for hardened regions 18 will be dependent upon numerous factors, including the materials and the sizes of wires 12 and 16, intended operational characteristics, drive systems used for advancing the electrode wire, etc.

The addition of the regions 18 to the wire 12 therefore provides advantages of a harder wire with reduced friction relative to a softer wire, but with the formability and ease of coiling made possible by the use of the softer wire 12.

Features of the present invention may also find applications for other uses. For example, illustrated in Figure 12 is conduit 34 having cable core 36 for use as a control wire as part of an actuation system. In this case, cable core 36 typically would move in a reciprocating manner. Despite this difference, features of resistance to movement and wear are present in this application as well. In this case, wire guide conduit 34 may be formed of a non-round wire and have the local hardened regions 18 as described previously. Control cable conduit 34 can be used with clutch cables, brake cables, throttle control cables, remote mirror control cables, door latch cables, and trunk and hood latch cables, etc.

In the foregoing description, various features of the present invention are grouped together in one or more embodiments for the purpose of streamlining the disclosure. This method of disclosure is not to be interpreted as reflecting an intention that the claimed embodiments require more features than are expressly recited in each claim. Rather, as the following claims reflect, inventive aspects lie in less than all features of a single foregoing disclosed embodiment. Thus, the following claims are incorporated by reference herein in their entirety, with each claim standing on its own as a separate embodiment of the present invention.

It is intended that the foregoing description be only illustrative of the present invention and that the present invention be limited only by the hereinafter appended claims.

## Claims

1. A wire guide conduit (10) adapted for allowing movement of a core (36), the conduit (10) comprising:
a wire (12) coiled in a helical manner to define the conduit (10) and form an internal passageway (24) of the conduit (10), the passageway (24) defining a longitudinal axis (25),
wherein the wire (12) has a cross-section with a major axis (A-A) and a minor axis (B-B), wherein a thickness of the wire (12) along the major axis (A-A) is greater than a thickness of the wire (12) along the minor axis (B-B),
wherein the wire (12) is coiled in the helical manner to present the major axis (A-A) generally parallel with the longitudinal axis (25) of the passageway (24), the passageway (24) adapted for receiving the core (36),
**characterized in that**
the wire (12) has a straight configuration prior to being coiled and includes periodically spaced locally hardened regions (18) having a surface hardness greater than areas of the wire (12) outside of the locally hardened regions (18), and
that the locally hardened regions (18) are disposed on an inside surface of the conduit (10) facing the internal passageway (24) when the wire (12) is coiled in the helical manner.

2. The wire guide conduit (10) of claim 1, wherein the wire (12) consists of a single wire (12) coiled in the helical manner or, wherein the wire (12) has a generally elliptical cross-section.

3. The wire guide conduit (10) of claim 1, wherein the internal passageway (24) of the wire guide conduit (10) defines an inner diameter, and wherein the inner diameter is constant along substantially the entire length of the conduit (10) or,
wherein the internal passageway (24) of the wire guide conduit (10) defines an inner diameter, and wherein the inner diameter is adapted to closely receive the core (36) in the form of a wire having a circular cross-sectional shape.

4. The wire guide conduit (10) of claim 1, wherein the wire (12) has opposed first and second sides on opposite sides of the major axis (A-A) and extending along the major axis (A-A) and wherein the locally hardened surfaces are provided on only the first side of the wire (12) so that when the wire (12) is coiled to form the wire guide conduit (10), the first side of the wire (12) forms the inner passageway (24) of the conduit (10) so that the hardened surfaces are provided only on the inner passageway (24) of the conduit (10) or
wherein the wire guide conduit (10) is configured to be used in a weld wire dispensing system with the core (36) in the form of a welding electrode wire (16).

5. The wire guide conduit (10) of claim 1, wherein the locally hardened regions (18) form a pattern along the wire (12) when the wire (12) is in the straight configuration.

6. The wire guide conduit (10) of claim 5, wherein locally hardened regions (18) are equally spaced when the wire (12) is in the straight configuration.

7. The wire guide conduit (10) of claim 5, wherein the pattern includes one of a series of dots, a series of stripes, a series of alternatingly inclined stripes, a series of inter-locking circles along the length of the wire (12), or a series of interlocking circles forming stripes across the surface of the wire (12).

8. The wire guide conduit (10) of claim 1, wherein the locally hardened region (18) is disposed within a profile of the wire (12) when the wire (12) is in a straight configuration such that the locally hardened region (18) does not substantially project relative to adjacent non-hardened regions.

9. The wire guide conduit (10) of claim 1, wherein an outside surface of the wire guide conduit (10) does not include any locally hardened regions (18) or
wherein the locally hardened regions (18) are disposed at various circumferential and longitudinal locations on the inside surface of the conduit (10) or
wherein the locally hardened regions (18) do not extend fully across the wire (12) along the major axis (A-A).

10. A method for forming a wire guide conduit (10) forming an internal passageway (24) for the passage of a core (36) comprising the steps of:
providing a wire (12) in a straight configuration, the wire (12) having a cross-section forming a major axis (A-A) and a minor axis (B-B), wherein a thickness of the wire (12) along the major axis (A-A) is greater than a thickness of the wire (12) along the minor axis (B-B);
wherein the wire (12) has opposed first and second sides on opposite sides of the major axis (A-A) and extending along the major axis (A-A),
**characterized by** the steps of
applying an energy beam (30) to the first side of the wire (12) causing localized heating of a surface of the first side and creating discrete and separated areas of locally hardened regions (18), and
coiling the wire (12) having the locally hardened regions (18) such that the major axis (A-A) of the wire (12) is aligned with a longitudinal axis (25) defined by the conduit (10) in a manner to present the locally hardened regions (18) toward the internal passageway (24) to form the wire guide conduit (10).

11. The method of claim 10, wherein the core (36) is an electrode wire (16) and the wire guide conduit (10) is used for conducting the electrode wire (16) toward a MIG welding torch (20).

12. The method of claim 10, wherein the energy beam (30) is a laser (28) producing a beam (30) directed onto the first surface of wire (12).

13. The method of claim 10, wherein the beam (30) is tightly focused and moves longitudinally relative to the wire (12) during application of the beam (30), wherein the beam (30) is a continuous wave or pulsed.

14. The method of claim 13, wherein, as the beam (30) moves longitudinally relative to the wire (12), the beam (30) is maintained at a constant lateral orientation relative to the cross-section axis of the wire (12) during application of the beam (30) or the beam (30) moves laterally relative to the wire (12) during application of the beam (30).

15. The method of claim 10, wherein the locally hardened regions (18) are disposed at various circumferential and longitudinal locations on the inside surface of the conduit (10) and no locally hardened regions (18) are disposed on the outside surface of the conduit (10).

## Patentansprüche

1. Ein Drahtführungskanal (10), der geeignet ist, die Bewegung eines Kerns (36) zu ermöglichen, wobei der Kanal (10) Folgendes aufweist:
einen Draht (12), der spiralförmig gewickelt ist, um den Kanal (10) zu definieren und einen inneren Durchgang (24) des Kanals (10) zu bilden, wobei der Durchgang (24) eine Längsachse (25) definiert,
wobei der Draht (12) einen Querschnitt mit einer Hauptachse (A-A) und einer Nebenachse (B-B) aufweist, wobei eine Dicke des Drahtes (12) entlang der Hauptachse (A-A) größer ist als eine Dicke des Drahtes (12) entlang der Nebenachse (B-B),
wobei der Draht (12) spiralförmig gewickelt ist, so dass die Hauptachse (A-A) im Wesentlichen parallel zur Längsachse (25) des Durchgangs (24) verläuft, wobei der Durchgang (24) zur Aufnahme des Kerns (36) geeignet ist,
**dadurch gekennzeichnet, dass**
der Draht (12) vor dem Aufwickeln eine gerade Konfiguration hat und in regelmäßigen Abständen lokal gehärtete Bereiche (18) mit einer Oberflächenhärte aufweist, die größer als die Oberflächenhärte in den Bereichen des Drahtes (12) außerhalb der lokal gehärteten Bereiche (18) ist, und
dass die lokal gehärteten Bereiche (18) an einer Innenfläche des Kanals (10) angeordnet sind, die dem inneren Durchgang (24) zugewandt ist, wenn der Draht (12) spiralförmig aufgewickelt ist.

2. Drahtführungskanal (10) nach Anspruch 1, wobei der Draht (12) aus einem einzigen, spiralförmig gewickelten Draht (12) besteht oder wobei der Draht (12) einen im Wesentlichen elliptischen Querschnitt aufweist.

3. Drahtführungskanal (10) nach Anspruch 1, wobei der innere Durchgang (24) des Drahtführungskanals (10) einen Innendurchmesser definiert, und wobei der Innendurchmesser im Wesentlichen über die gesamte Länge des Kanals (10) konstant ist, oder wobei der innere Durchgang (24) des Drahtführungskanals (10) einen Innendurchmesser definiert, und wobei der Innendurchmesser angepasst ist, um den Kern (36) in Form eines Drahtes mit kreisförmigen Querschnitt eng aufzunehmen.

4. Drahtführungskanal (10) nach Anspruch 1, wobei der Draht (12) gegenüberliegende erste und zweite Seiten auf gegenüberliegenden Seiten der Hauptachse (A-A) aufweist und sich entlang der Hauptachse (A-A) erstrecken, und wobei die lokal gehärteten Oberflächen nur auf der ersten Seite des Drahtes (12) vorgesehen sind, so dass, wenn der Draht (12) zur Bildung des Drahtführungskanals (10) aufgewickelt wird, die erste Seite des Drahtes (12) den inneren Durchgang (24) des Kanals (10) bildet, so dass die gehärteten Oberflächen nur auf dem inneren Durchgang (24) des Kanals (10) angeordnet sind, oder wobei der Drahtführungskanal (10) so konfiguriert ist, dass er in einem Schweißdrahtausgabesystem mit dem Kern (36) in Form eines Schweißelektrodendrahtes (16) verwendet werden kann.

5. Drahtführungskanal (10) nach Anspruch 1, wobei die lokal gehärteten Bereiche (18) ein Muster entlang des Drahtes (12) bilden, wenn sich der Draht (12) in der geraden Konfiguration befindet.

6. Drahtführungskanal (10) nach Anspruch 5, wobei lokal gehärtete Bereiche (18) in regelmäßigen Abständen sind, wenn sich der Draht (12) in der geraden Konfiguration befindet.

7. Drahtführungskanal (10) nach Anspruch 5, wobei das Muster eines von einer Reihe von Punkten, einer Reihe von Streifen, einer Reihe von abwechselnd geneigten Streifen, einer Reihe von ineinandergreifenden Kreisen entlang der Länge des Drahtes (12) oder einer Reihe von ineinandergreifenden Kreisen, die Streifen über die Oberfläche des Drahtes (12) bilden, umfasst.

8. Drahtführungskanal (10) nach Anspruch 1, wobei der lokal gehärtete Bereich (18) innerhalb eines Profils des Drahtes (12) angeordnet ist, wenn der Draht (12) in einer geraden Konfiguration ist, so dass der lokal gehärtete Bereich (18) relativ zu benachbarten nicht gehärteten Bereichen nicht wesentlich vorsteht.

9. Drahtführungskanal (10) nach Anspruch 1, wobei eine Außenfläche des Drahtführungskanals (10) keine lokal gehärteten Bereiche (18) oder
wobei die lokal gehärteten Bereiche (18) an verschiedenen Umfangs- und Längsstellen auf der Innenfläche des Kanals (10) angeordnet sind oder
wobei sich die lokal gehärteten Bereiche (18) nicht vollständig über den Draht (12) entlang der Hauptachse (A-A) erstrecken.

10. Verfahren zur Herstellung eines Drahtführungskanals (10), der einen inneren Durchgang (24) für den Durchgang eines Kerns (36) bildet, mit den folgenden Schritten:
bereitstellen eines Drahtes (12) in einer geraden Konfiguration, wobei der Draht (12) einen Querschnitt aufweist, der eine Hauptachse (A-A) und eine Nebenachse (B-B) bildet, wobei eine Dicke des Drahtes (12) entlang der Hauptachse (A-A) größer ist als eine Dicke des Drahtes (12) entlang der Nebenachse (B-B);
wobei der Draht (12) gegenüberliegende erste und zweite Seiten auf gegenüberliegenden Seiten der Hauptachse (A-A) aufweist und sich entlang der Hauptachse (A-A) erstreckt,
**gekennzeichnet durch** die folgenden Schritte
Anwenden eines Energiestrahls (30) auf die erste Seite des Drahts (12), was eine örtliche Erwärmung einer Oberfläche der ersten Seite bewirkt und diskrete und getrennte Bereiche von örtlich gehärteten Bereichen (18) erzeugt, und
Aufwickeln des Drahts (12) mit den lokal gehärteten Bereichen (18), so dass die Hauptachse (A-A) des Drahts (12) mit einer Längsachse (25), die durch den Kanal (10) definiert ist, in einer Weise ausgerichtet ist, dass die lokal gehärteten Bereiche (18) zu dem inneren Durchgang (24) hin ausgerichtet werden, um den Drahtführungskanal (10) zu bilden.

11. Verfahren nach Anspruch 10, wobei der Kern (36) ein Elektrodendraht (16) ist und der Drahtführungskanal (10) dazu verwendet wird, den Elektrodendraht (16) zu einem MIG-Schweißbrenner (20) zu führen.

12. Verfahren nach Anspruch 10, wobei der Energiestrahl (30) ein Laser (28) ist, der einen Strahl (30) erzeugt, der auf die erste Oberfläche des Drahtes (12) gerichtet ist.

13. Verfahren nach Anspruch 10, wobei der Strahl (30) eng fokussiert ist und sich während der Anwendung des Strahls (30) in Längsrichtung relativ zum Draht (12) bewegt, wobei der Strahl (30) eine kontinuierliche Welle oder gepulst ist.

14. Verfahren nach Anspruch 13, wobei bei dem der Strahl (30) bei seiner Bewegung in Längsrichtung relativ zum Draht (12) während der Anwendung des Strahls (30) in einer konstanten seitlichen Ausrichtung relativ zur Querschnittsachse des Drahtes (12) gehalten wird oder wobei sich der Strahl (30) während der Anwendung des Strahls (30) seitlich relativ zum Draht (12) bewegt.

15. Verfahren nach Anspruch 10, wobei die lokal gehärteten Bereiche (18) an verschiedenen Umfangs- und Längsstellen auf der Innenfläche des Kanals (10) angeordnet sind und keine lokal gehärteten Bereiche (18) auf der Außenfläche des Kanals (10) angeordnet sind.

## Revendications

1. Conduit de guidage de fil (10) adapté pour permettre le mouvement d'un noyau (36), le conduit (10) comprenant :un fil (12) enroulé de manière hélicoïdale pour définir le conduit (10) et former un passage interne (24) du conduit (10), le passage (24) définissant un axe longitudinal (25),
le fil (12) a une section transversale avec un grand axe (A-A) et un petit axe (B-B), une épaisseur du fil (12) le long du grand axe (A-A) est supérieure à une épaisseur du fil (12) le long du petit axe (B-B),
le fil (12) est enroulé de manière hélicoïdale pour présenter l'axe principal (A-A) généralement parallèle à l'axe longitudinal (25) du passage (24), le passage (24) étant adapté pour recevoir le noyau (36),
**caractérisé par le fait que**
le fil (12) a une configuration droite avant d'être enroulé et comprend des régions localement durcies (18) périodiquement espacées ayant une dureté de surface supérieure à celle des zones du fil (12) en dehors des régions localement durcies (18), et
que les régions localement durcies (18) sont disposées sur une surface intérieure du conduit (10) faisant face au passage interne (24) lorsque le fil (12) est enroulé de manière hélicoïdale.

2. Le conduit de guidage de fil (10) de la revendication 1, le fil (12) consiste en un seul fil (12) enroulé de manière hélicoïdale ou le fil (12) a une section transversale généralement elliptique.

3. Le conduit de guidage de fil (10) de la revendication 1, le passage interne (24) du conduit de guidage de fil (10) définit un diamètre intérieur, et le diamètre intérieur est constant sur pratiquement toute la longueur du conduit (10) ou,
le passage interne (24) du conduit de guidage du fil (10) définit un diamètre intérieur, et le diamètre intérieur est adapté pour recevoir étroitement le noyau (36) sous la forme d'un fil ayant une forme de section transversale circulaire.

4. Le conduit de guidage de fil (10) de la revendication 1, le fil (12) présente un premier et un deuxième côté opposé sur les côtés opposés de l'axe principal (A-A) et s'étendant le long de l'axe principal (A-A) et les surfaces localement durcies sont fournies uniquement sur le premier côté du fil (12) de sorte que lorsque le fil (12) est enroulé pour former le conduit de guidage de fil (10), le premier côté du fil (12) forme le passage intérieur (24) du conduit (10) de sorte que les surfaces durcies sont fournies uniquement sur le passage intérieur (24) du conduit (10), ou
le conduit de guidage de fil (10) est configuré pour être utilisé dans un système de distribution de fil de soudure avec le noyau (36) sous la forme d'un fil d'électrode de soudure (16).

5. Le conduit de guidage de fil (10) de la revendication 1, les régions localement durcies (18) forment un motif le long du fil (12) lorsque le fil (12) est dans la configuration droite.

6. Le conduit de guidage de fil (10) de la revendication 5, les régions localement durcies (18) sont également espacées lorsque le fil (12) est dans la configuration droite.

7. Le conduit de guidage de fil (1) de la revendication 5, le motif comprend l'un d'une série de points, une de bandes, une série de bandes alternativement inclinées, une série de cercles entrecroisés sur la longueur du fil (12), ou une série de cercles entrecroisés formant des bandes sur la surface du fil (12).

8. Le conduit de guidage de fil (10) de la revendication 1, la région localement durcie (18) est disposée à l'intérieur d'un profil du fil (12) lorsque le fil (12) est dans une configuration droite de telle sorte que la région localement durcie (18) ne dépasse pas substantiellement par rapport aux régions adjacentes non durcies.

9. Le conduit de guidage de fil (10) de la revendication 1, une surface extérieure du conduit de guidage de fil (10) ne comprend pas de régions localement durcies (18) ou les régions localement durcies (18) sont disposées à divers endroits circonférentiels et longitudinaux sur la surface intérieure du conduit (10) ou
les régions localement durcies (18) ne s'étendent pas complètement sur le fil (12) le long de l'axe principal (A-A).

10. Procédé de formation d'un conduit de guidage de fil (10) formant un passage interne (24) pour le passage d'un noyau (36), comprenant les étapes suivantes :
fournir un fil (12) dans une configuration droite, le fil (12) ayant une section transversale formant un axe majeur (A-A) et un axe mineur (B-B), une épaisseur du fil (12) le long de l'axe majeur (A-A) est supérieure à une épaisseur du fil (12) le long de l'axe mineur (B-B) ;
le fil (12) présente un premier et un deuxième côté opposé sur les côtés opposés de l'axe principal (A-A) et s'étendant le long de l'axe principal (A-A),
**caractérisé par** les étapes suivantes
appliquer un faisceau d'énergie (30) au premier côté du fil (12), ce qui provoque un chauffage localisé d'une surface du premier côté et crée des zones discrètes et séparées de régions localement durcies (18), et
enrouler le fil (12) comportant les régions localement durcies (18) de telle sorte que l'axe principal (A-A) du fil (12) soit aligné avec un axe longitudinal (25) défini par conduit (10) de manière à présenter les régions localement durcies (18) vers le passage interne (24) pour former le conduit de guidage du fil (10).

11. Procédé de la revendication 10, le noyau (36) est un fil-électrode (16) et le conduit de guidage du fil (10) est utilisé pour conduire le fil-électrode (16) vers une torche de soudage **MIG** (20).

12. Procédé de la revendication 10, dans laquelle le faisceau d'énergie (30) est un laser (28) produisant un faisceau (30) dirigé sur la première surface du fil (12).

13. Procédé de la revendication 10, le faisceau (30) est étroitement focalisé et se déplace longitudinalement par rapport au fil (12) pendant l'application du faisceau (30), le faisceau (30) est une onde continue ou pulsée.

14. Procédé selon la revendication 13, dans lequel le faisceau (30) est maintenu dans une orientation latérale constante par rapport à l'axe de section transversale du fil (12) lors de son déplacement longitudinal par rapport au fil (12) pendant l'application du faisceau (30), ou dans lequel le faisceau (30) se déplace latéralement par rapport au fil (12) pendant l'application du faisceau (30).

15. Procédé de la revendication 10, dans laquelle les régions localement durcies (18) sont disposées à divers endroits circonférentiels et longitudinaux sur la surface intérieure du conduit (10) et aucune région localement durcie (18) n'est disposée sur la surface extérieure du conduit (10).
